# FASCICULE DE BREVET EUROPEEN

(11) **EP 3 941 304 B1**
(45) Date de publication et mention de la délivrance du brevet: **21.02.2024**
(21) Numéro de dépôt: 19713433.1
(22) Date de dépôt: 22.03.2019
(51) Int. Cl.: A45C 11/04

(54) **ENSEMBLE COMPRENANT DES LUNETTES ET UN ÉTUI POUR LE RANGEMENT DESDITES LUNETTES**
ANORDNUNG MIT BRILLE UND ETUI ZUR AUFBEWAHRUNG DER BESAGTEN BRILLE
ASSEMBLY COMPRISING SPECTACLES AND A CASE FOR STORING SAID SPECTACLES

(43) Date de publication de la demande: 26.01.2022
(73) Titulaire: Binoptics Sprl, 1050 Bruxelles (BE)
(72) Inventeur: ALEX, Pierre, 1050 Bruxelles (BE)
(74) Mandataire: Sayettat, Julien Christian
(86) Numéro de dépôt international: PCT/EP2019/057192
(87) Numéro de publication internationale: WO 2020/192859

(56) Documents cités:
- WO-A1-2018/081205
- FR-A1- 2 707 850
- JP-A- H11 127 933
- JP-Y1- S 412 054

## Description

L'invention concerne un ensemble comprenant des lunettes et un étui pour le rangement desdites lunettes.

On connait des lunettes comprenant un module optique destiné à être disposé en regard des yeux d'un porteur pour permettre la vision à travers lui, ainsi que deux branches montées chacune en rotation sur respectivement un bord externe dudit module optique, chaque branche étant destinée à reposer derrière respectivement une oreille du porteur pour assurer le maintien desdites lunettes sur la tête dudit porteur durant leur utilisation.

En particulier, les branches sont déplaçables réversiblement entre une position d'utilisation, dans laquelle elles s'étendent dans une direction sensiblement perpendiculaire à un plan frontal défini par les bords externes du module optique, et une position de rangement, dans laquelle elles sont rabattues à l'arrière dudit module optique. Un tel agencement permet de limiter l'encombrement des lunettes lorsqu'elles ne sont pas utilisées, afin de pouvoir plus facilement les ranger dans une poche de vêtement ou un sac.

De façon avantageuse, on peut prévoir un étui dans lequel ranger les lunettes avec leurs branches pliées, ce qui permet de les protéger contre les chocs et/ou contre des éléments extérieurs potentiellement polluants tels que le sable et/ou la poussière, afin de limiter les risques d'endommagement du module optique et/ou des branches.

Le document US-2011/0278181 décrit un étui de forme sensiblement plane, comprenant une ouverture supérieure qui débouche dans un compartiment agencé pour contenir des lunettes telles que décrites précédemment en position de rangement.

En particulier, ce document prévoit d'équiper l'étui d'un revêtement intérieur en mousse élastiquement déformable dans le compartiment, afin de permettre une déformation légère dudit revêtement lors de l'insertion des lunettes en position de rangement par l'ouverture supérieure. Ainsi, une fois les lunettes insérées dans le compartiment, le retour élastique du revêtement permet d'assurer le maintien desdites lunettes dans ledit compartiment.

Toutefois, cette solution ne donne pas entière satisfaction, en ce que l'étui s'avère relativement complexe, et donc coûteux à réaliser. Par ailleurs, le revêtement intérieur peut se dégrader au fil des utilisations, et notamment se déformer de façon permanente, ce qui compromet son efficacité à long terme, et donc la fiabilité du maintien des lunettes dans l'étui.

JP S41 2054 Y1 divulgue un ensemble comprenant des lunettes comprenant un module optique et deux branches montées chacune en rotation sur respectivement un bord externe dudit module optique, lesdites branches étant déplaçables réversiblement entre une position d'utilisation, dans laquelle elles s'étendent dans une direction sensiblement perpendiculaire à un plan frontal défini par lesdits bords externes, et une position de rangement, dans laquelle elles sont rabattues à l'arrière dudit module optique, lesdites lunettes présentant, lorsque les branches sont en position de rangement, une conformation stable d'épaisseur nominale ; et un étui comprenant une fente supérieure débouchant dans un compartiment agencé pour contenir lesdites lunettes en conformation stable, afin de permettre le rangement desdites lunettes les lunettes présentent une conformation contrainte élastiquement d'épaisseur réduite par rapprochement relatif du module optique et des branches en position de rangement, et en ce que la fente supérieure est dimensionnée pour permettre le passage à travers elle des lunettes en conformation contrainte, ledit compartiment étant agencé pour que le retour élastique en conformation de rangement desdites lunettes permette leur maintien dans ledit compartiment par interaction géométrique entre lesdites lunettes et ledit compartiment.

L'invention vise à perfectionner l'art antérieur en proposant un ensemble dans lequel l'étui et les lunettes sont agencés pour assurer un maintien fiable desdites lunettes dans ledit étui lorsqu'elles ne sont pas utilisées, et ainsi garantir une bonne protection desdites lunettes contre d'éventuelles dégradations.

A cet effet, l'invention propose un ensemble selon la revendication 1.

D'autres particularités et avantages de l'invention apparaîtront dans la description qui suit, faite en référence aux figures annexée, dans lesquelles :
- les figures 1a et 1b représentent en vue de face des lunettes d'un ensemble selon un mode de réalisation de l'invention, respectivement en position d'utilisation (figure 1a) et en position de rangement (figure 1b) ;
- les figures 2a et 2b représentent en vue de dessus les lunettes des figures 1a et 1b, respectivement en position d'utilisation (figure 2a) et lors du pliage des branches vers la position de rangement (figure 2b) ;
- la figure 3 représente en vue de face un étui d'un ensemble selon un mode de réalisation de l'invention ;
- la figure 4 représente en perspective posé à plat un ensemble comprenant l'étui de la figure 3 et les lunettes des figures 1a, 1b, 2a, 2b en position de rangement ;
- les figures 5a, 5b et 5c représentent en vue de face (figure 5a) et en perspective vue de l'avant (figures 5b et 5c) l'ensemble de la figure 4 suivant différentes étapes du rangement des lunettes dans l'étui ;
- les figures 6a, 6b et 6c représentent l'ensemble de la figure 4 avec les lunettes rangées dans l'étui, respectivement en vue de face avec les lunettes représentées en pointillés (figure 6a), en perspective vue de l'avant (figure 6b) et en perspective avec ledit ensemble posé à plat (figure 6c) ;
- la figure 7 représente en perspective vue de dessus un étui selon une variante de réalisation des figures précédentes.

En relation avec ces figures, on décrit ci-dessous un ensemble comprenant des lunettes 1 et un étui 2 pour le rangement desdites lunettes.

Les lunettes 1 comprennent un module optique 3 destiné à être disposé en regard des yeux d'un porteur pour permettre la vision à travers lui. Dans le mode de réalisation représenté, le module 3 comprend deux unités optiques 4 reliées au niveau de leurs bords internes 3a respectifs par un pont de nez 5, et comprenant chacune une paroi transparente au travers de laquelle la vision s'effectue.

Dans cette description, les termes de positionnement dans l'espace sont pris en référence à la position des lunettes 1 par rapport au visage d'un porteur ayant revêtu lesdites lunettes. En particulier, le terme « arrière » est relatif à une disposition en regard du visage et le terme « avant » est relatif à une disposition opposée au visage. Par ailleurs, les termes « interne » et « externe » sont relatifs à des dispositions respectivement proche et éloignée du nez du porteur.

De façon connue, les parois transparentes des unités optiques 4 peuvent être adaptées à la vue du porteur, notamment pour corriger des défauts de vision tels que la myopie, l'hypermétropie, l'astigmatisme et/ou la presbytie. Elles peuvent également être agencées pour protéger les yeux du porteur contre la luminosité, notamment la luminosité solaire et/ou la luminosité dégagée par les écrans de télévision et/ou d'ordinateur (dite « lumière bleue »), et/ou avoir subi un traitement adapté pour prévenir certains effets indésirables pouvant entraver la vision du porteur, par exemple un traitement anti-buée, anti-rayures, anti-reflet et/ou anti-statique.

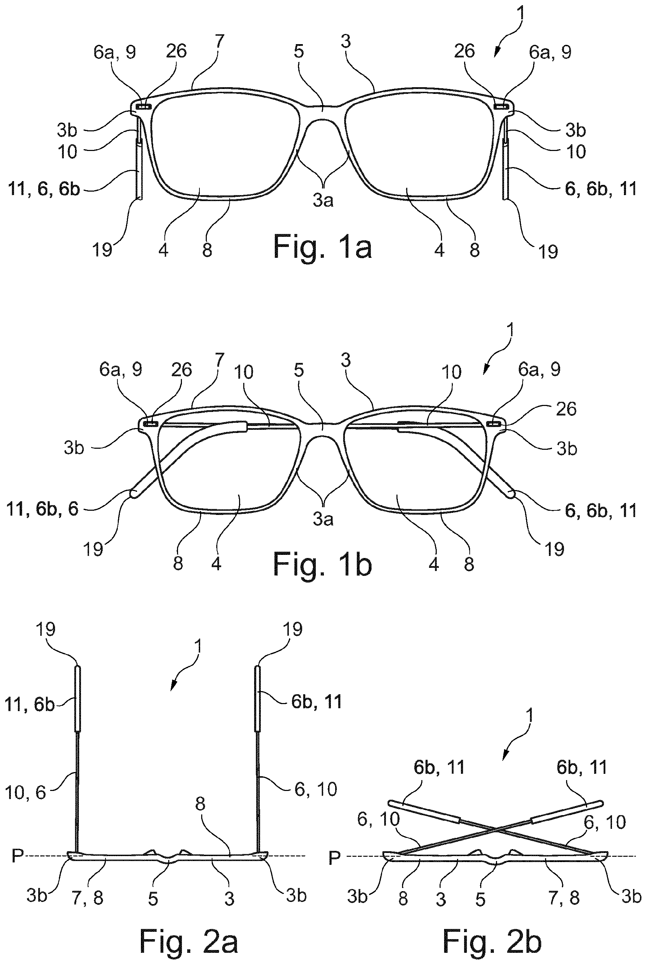

Pour pouvoir être maintenues sur la tête du porteur, les lunettes 1 comprennent deux branches 6 montées chacune en rotation sur respectivement un bord externe 3b du module optique 3, lesdites branches étant déplaçables réversiblement entre :
- une position d'utilisation, dans laquelle elles s'étendent dans une direction sensiblement perpendiculaire à un plan frontal P défini par lesdits bords externes, afin de pouvoir être disposées à l'arrière de respectivement une oreille du porteur (figures 1b, 2a) ; et
- une position de rangement, dans laquelle elles sont rabattues à l'arrière dudit module optique, afin de limiter l'encombrement des lunettes 1 pour faciliter leur rangement dans une poche de vêtement ou un sac (figures 1a, 2b, 4).

Sur les figures, le module optique 3 comprend une monture 7 qui présente deux cerclages 8 entourant chacun respectivement une unité optique 4, le pont de nez 5 étant fixé au bords internes 3a respectifs desdits cerclages, et chaque branche 6 étant montée en rotation sur le bord externe 3b de respectivement un desdits cerclages.

En particulier, le pont de nez 5 est formé d'une seule pièce avec les cerclages 8, ce qui permet de faciliter la fabrication de la monture 7, et donc des lunettes 1.

En variante, les cerclages 8 peuvent n'entourer que partiellement les unités optiques 4, suivant l'effet esthétique souhaité pour les lunettes 1. Par ailleurs, le module optique 3 peut être dépourvu de monture, le pont de nez 5 et les branches 6 étant dans ce cas montés directement sur respectivement les bords internes et externes des unités optiques 4.

En relation avec les figures 2a et 2b, le module optique 3 est inscrit dans le plan frontal P défini par ses bords externes 3b, afin de permettre une réduction de l'épaisseur des lunettes 1 en position de rangement. En variante, le module optique 3 peut présenter une forme courbe pour améliorer la vision périphérique du porteur au travers des lunettes 1.

Chaque branche 6 est munie en son extrémité proximale 6a d'un crochet 9 monté en rotation sur un axe équipant les bords externes 3b de chaque cerclage 8. En particulier, pour réduire l'épaisseur des lunettes 1 en position de rangement, les axes sont intégrés dans l'épaisseur du module optique 3, notamment en étant encastrés dans la monture 7.

Pour faciliter le montage du crochet 9 sur un axe encastré dans la monture 7, chaque bord externe 3b présente un évidement 26 débouchant sur l'avant et l'arrière de ladite monture, et au travers duquel ledit axe est accessible pour effectuer ce montage. Par ailleurs, pour des raisons esthétiques, un clip, notamment en matière métallique, peut être inséré sur le côté avant de chaque évidement 26 pour l'obstruer, notamment pour cacher le montage du crochet 9 sur son axe de rotation.

Sur les figures, chaque branche 6 comprend un corps 10 réalisé dans un fil métallique, l'extrémité proximale 6a dudit corps étant repliée sur elle-même pour former le crochet 9 permettant son montage en rotation sur la monture 7.

Par ailleurs, chaque branche 6 comprend une portion distale 6b destinée à reposer à l'arrière de respectivement une oreille du porteur, ladite portion distale étant courbée vers le bas pour améliorer le maintien des lunettes sur la tête dudit porteur, notamment pour empêcher la chute desdites lunettes lorsque ledit porteur penche son visage vers le bas. Pour améliorer le confort du porteur, chaque portion distale 6b est pourvue d'un revêtement 11, notamment en matière plastique, qui est associé par surmoulage sur le corps 10 en fil métallique.

Les lunettes 1 présentent, lorsqu'elles sont en position de rangement, une conformation stable d'épaisseur nominale et une conformation contrainte élastiquement d'épaisseur réduite par rapprochement relatif des branches 6 et du module optique 3.

Pour ce faire, les branches 6 et/ou le module optique 3 peuvent être réalisé(e)s au moins partiellement en un matériau élastiquement déformable. En particulier, dans le mode de réalisation représenté, la réalisation des branches 6 en un fil métallique permet une telle déformation. En outre, la monture 7 et/ou le pont de nez 5 peuvent également être réalisé(e)s en un matériau élastiquement déformable.

Pour permettre le rangement des lunettes 1, l'ensemble comprend un étui 2 comprenant une fente supérieure 12 débouchant dans un compartiment 13 agencé pour contenir lesdites lunettes en conformation stable.

En particulier, l'étui 2 présente une forme sensiblement plane et une épaisseur réduite, ce qui permet de limiter son encombrement, et ainsi de faciliter son rangement dans une poche de vêtement ou un sac.

De façon avantageuse, l'étui 2 peut être réalisé en matériau polymère présentant une rigidité suffisante pour assurer la protection des lunettes rangées. En particulier, l'étui 2 peut être réalisé en deux matières, avec une coque extérieure en matériau polymère rigide pour assurer la rigidité de l'ensemble et protéger les lunettes 1 contre les chocs, et un revêtement intérieur en matériau polymère plus souple pour assurer la protection des unités optiques 4.

La fente 12 est dimensionnée pour permettre le passage à travers elle des lunettes 1 en conformation contrainte, le compartiment 13 étant agencé pour que le retour élastique en conformation de rangement desdites lunettes permette leur maintien dans ledit compartiment par interaction géométrique entre lesdites lunettes et ledit compartiment.

De façon avantageuse, le compartiment 13 présente une dimension transversale qui est suffisante pour permettre le retour élastique en conformation stable des lunettes 1 à l'intérieur dudit compartiment, de sorte que la conformation de rangement desdites lunettes correspond à leur conformation stable. En variante, le compartiment 13 peut être agencé pour maintenir les lunettes 1 dans une conformation élastiquement contrainte, mais de façon moins importante que la conformation contrainte nécessaire au passage desdites lunettes à travers la fente 12.

Ainsi, on propose un étui 2 qui, en relation avec des lunettes 1 pouvant être contrainte élastiquement en épaisseur, permettant de maintenir de façon fiable lesdites lunettes dans son compartiment 13 lorsqu'elles ne sont pas utilisées, et donc de garantir une bonne protection desdites lunettes contre d'éventuelles dégradations, ceci tout en étant simple et peu coûteux à fabriquer.

En particulier, la mise en contrainte des lunettes est réalisée manuellement, notamment par pression entre deux doigts, et ce avantageusement avant la disposition des lunettes 1 dans l'étui 2. Pour ce faire, le compartiment 13 comprend un évidement central 14 agencé pour permettre la tenue manuelle des lunettes 1 en conformation contrainte dans le compartiment 13, afin de permettre leur rangement ou leur extraction dudit compartiment.

De façon avantageuse, l'évidement 14 est agencé pour recevoir le pont de nez 5 et les portions de branche 6 rangées en regard. Ainsi, pour ranger ou extraire les lunettes 1 de l'étui 2, le porteur interagit préférentiellement avec le pont de nez 5, ce qui lui permet notamment de ne pas placer ses doigts sur les unités optiques 4, et donc d'éviter de laisser sur lesdites unités optiques des marques de doigts pouvant entraver la vision dudit porteur lorsqu'il revêt lesdites lunettes.

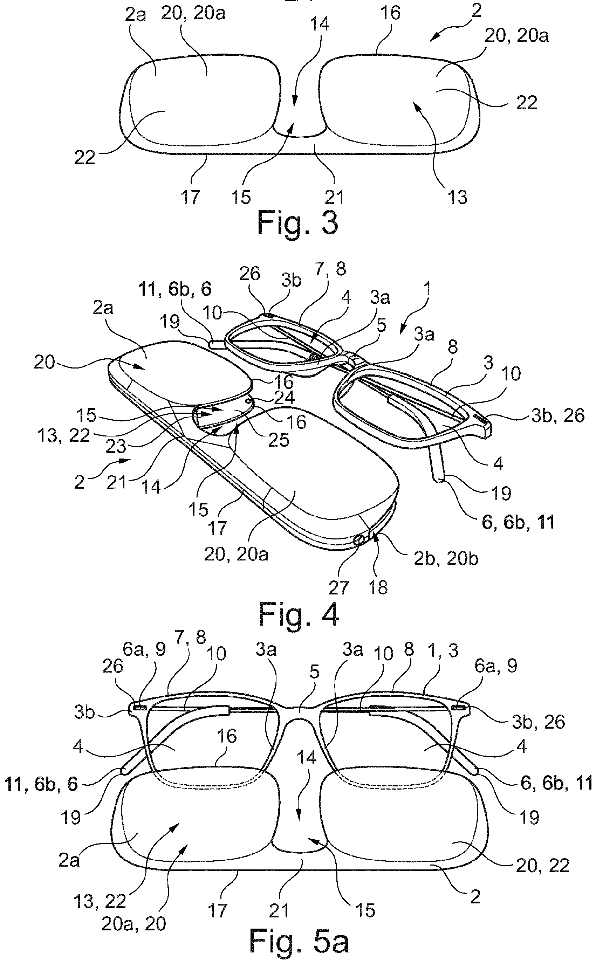

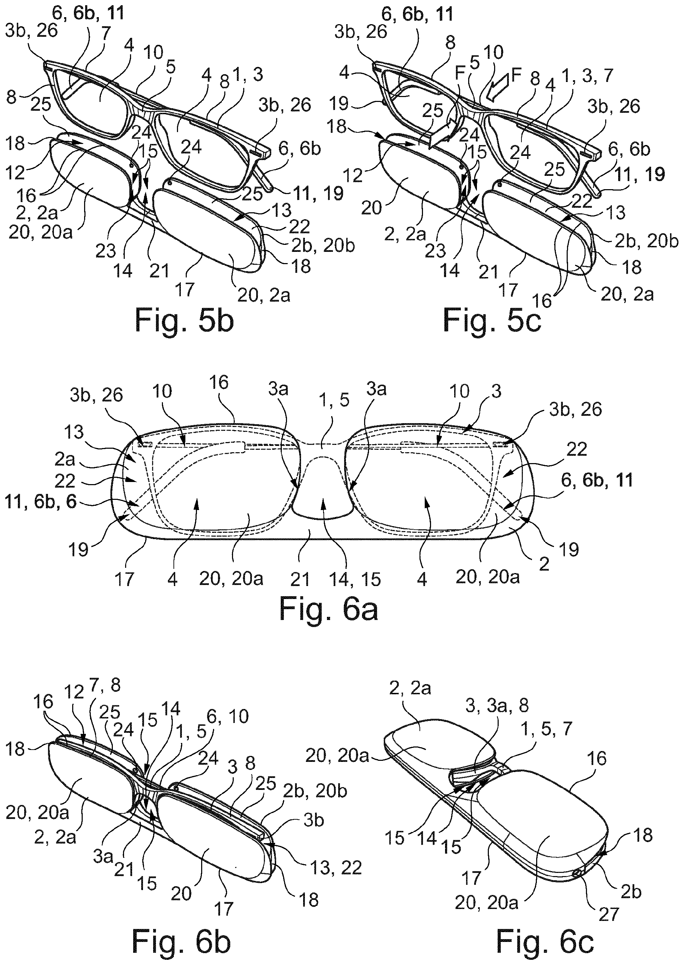

Pour pouvoir ranger les lunettes 1, le porteur, après avoir plié les branches 6 à l'arrière du module optique 3, pince manuellement lesdites lunettes au niveau du pont de nez 5 pour les disposer en conformation contrainte, comme représenté par les flèches F sur la figure 5c. Ensuite, le porteur fait passer les lunettes 1 ainsi contrainte par la fente 12 de l'étui 2 pour les placer dans le compartiment 13, en disposant ses doigts pinçant lesdites lunettes dans l'emplacement central 14. Enfin, une fois les lunettes 1 disposées dans le compartiment 13, le porteur les relâche en écartant ses doigts, afin de permettre leur retour élastique en conformation de rangement.

De même, pour pouvoir extraire les lunettes 1 de l'étui, le porteur pince le pont de nez 5 et les portions de branches 6 s'étendant dans l'emplacement central 14 pour les disposer en conformation contrainte, puis fait passer lesdites lunettes ainsi contraintes par la fente 12.

L'étui 2 comprend une face avant 2a et une face arrière 2b qui sont espacées l'une de l'autre pour former entre elles le compartiment 13, chacune desdites faces présentant une échancrure centrale 15 qui sont disposées en regard pour former l'évidement 14.

En particulier, le compartiment 13 peut être agencé pour pouvoir recevoir les lunettes 1 en disposant indifféremment l'avant ou l'arrière desdites lunettes contre la face avant 2a ou la face arrière 2b dudit compartiment, c'est-à-dire sans avoir à respecter de sens particulier, ce qui permet de faciliter le rangement desdites lunettes dans l'étui 2. En outre, pour améliorer l'ergonomie de l'ensemble lunettes 1 / étui 2, les faces avant 2a et arrière 2b peuvent présenter des surfaces extérieures d'aspect identique.

Les faces avant 2a et arrière 2b présentent chacune un bord supérieur 16 entre lesquels la fente 12 est formée et, à l'opposé de ladite fente, sont reliées par une bordure 17 de fermeture inférieure du compartiment 13. Par ailleurs, les faces avant 2a et arrière 2b forment entre elles, de chaque côté de l'étui 2, des bords externes 18 qui sont ouverts entre lesdites faces depuis la bordure 17 de fermeture jusqu'à la fente 12, ce qui permet de faciliter le rangement ou l'extraction des lunettes 1 en limitant les frottements entre l'étui 2 et les bords externes 3b desdites lunettes et/ou l'extrémité distale 19 des branches 6.

Dans le mode de réalisation représenté, l'étui 2 comprend deux modules 20 de rangement de respectivement une unité optique 4 reliés entre eux par un pont inférieur 21 disposé à l'opposé de la fente 12, l'évidement 14 étant formé entre les modules 20.

Chaque module 20 comprend une paroi avant 20a et une paroi arrière 20b issues de respectivement la face avant 2a et la face arrière 2b de l'étui 2, et espacées l'une de l'autre pour former entre elles un logement 22 de réception de respectivement une unité optique 4 et des portions de branches 6 disposées en regard.

Les parois 20a, 20b de chaque module 20 forment entre elles un bord interne 23 qui est au moins partiellement ouvert, afin de pouvoir disposer entièrement les lunettes 1 dans le compartiment 13. Sur les figures, le bord interne 23 de chaque module 20 est ouvert depuis le pont inférieur 21 jusqu'à la fente 12, afin d'éviter les frottements contre ledit module du bord interne 3a de l'unité optique 4 correspondante et/ou des portions de branches 6 rangées en regard.

Selon une réalisation, l'étui 2 peut être agencé pour se déformer élastiquement par appui des lunettes 1 en confirmation de rangement dans le compartiment 13, afin d'assurer le maintien des lunettes 1 dans ledit compartiment. En particulier, l'ouverture des bords externes 18 contribue à la déformation de l'étui 2 par appui des lunettes 1 dans le compartiment 13.

Le compartiment 13 ainsi déformé peut présenter une largeur qui est sensiblement égale à l'épaisseur nominale des lunettes 1 en conformation stable, afin d'assurer un maintien par friction desdites lunettes dans ledit compartiment.

En outre, la fente 12 peut présenter une largeur qui est comprise entre les épaisseurs respectives des lunettes en conformation nominale et en conformation contrainte, par exemple en étant de l'ordre de l'épaisseur des lunettes 1 en conformation contrainte.

Par ailleurs, la fente 12 peut présenter une largeur qui est inférieure à celle du compartiment 13, afin de sécuriser tout glissement intempestif par ladite fente desdites lunettes rangées dans le compartiment 13, et notamment la chute par gravité desdites lunettes hors de l'étui 2 lorsque celui-ci est orienté avec la fente 12 tournée vers le bas.

Pour ce faire, au moins l'un des bords supérieurs 16 peut être incurvé intérieurement pour réduire la largeur de la fente 12 par rapport à celle du compartiment 13.

Le compartiment 13 peut également comprendre au moins un plot 24 saillant intérieurement dans ledit compartiment, ledit plot étant agencé pour retenir les lunettes 1 en conformation de rangement dans ledit compartiment par interaction géométrique avec les branches 6 et/ou le module optique 3.

Un tel plot 24 peut être formé à proximité de la fente supérieure 12, afin qu'une partie supérieure du module optique 3 et/ou des branches 6 viennent en appui vertical sous ledit plot lorsque les lunettes 1 sont rangées dans le compartiment 13 en conformation de rangement.

En particulier, les dimensions du compartiment 13 et/ou des lunettes 1 peuvent être agencées pour que lesdites lunettes soient espacées desdits plots d'une distance au moins égale à 5 mm lorsque l'étui 2 contenant lesdites lunettes est disposé avec la fente 12 tournée vers le haut. Ainsi, les lunettes 1 viennent en appui contre les plots 24 uniquement en cas de déplacement des lunettes 1 dans le compartiment 13, par exemple sous l'effet de la gravité lorsque l'ensemble est orienté avec la fente 12 tournée vers le bas. En variante, les lunettes 1 peuvent venir en appui de façon permanente sous les plots 24, afin de limiter leurs déplacements dans le compartiment 13, et ainsi améliorer leur protection.

Dans le mode de réalisation représenté, les parois avant 20a et arrière 20b de chaque module de rangement 20 présentent chacune une surface intérieure 25 contre laquelle l'unité optique 4 ou les portion de branches 6 rangées en regard est(sont) destinée(s) à être disposée(s), notamment en contact frottant, lorsque les lunettes 1 sont rangées dans le compartiment 13 , un plot 24 étant formé sur au moins l'une desdites surfaces.

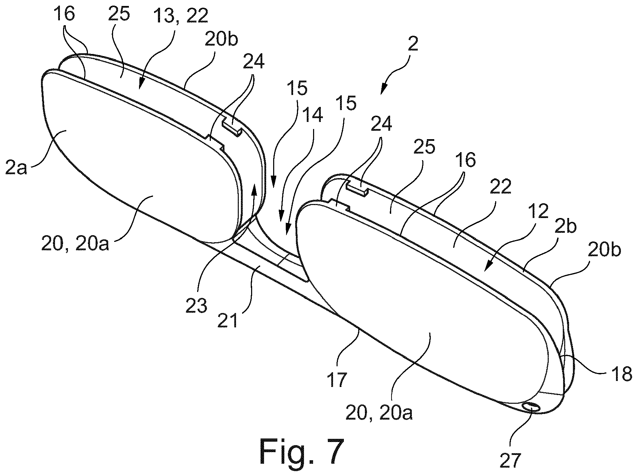

En particulier, comme représenté sur la figure 7, un tel plot 24 est formé sur chacune des surfaces intérieures 25 susmentionnées, un plot avant 24 étant en outre disposé en regard d'un plot arrière 24.

Le(s) plot(s) 24 présente(nt) des dimensions transversales et/ou longitudinales suffisamment importantes pour permettre la retenue des lunettes 1 dans le compartiment 13, notamment lorsque l'étui 2 est orienté avec la fente 12 vers le bas. Ainsi, on peut prévoir des plots 24 de forme sensiblement cylindrique dans la direction transversale, comme représenté notamment sur les figures 4, 5b, 5c, 6b et 6c, ou de forme allongée dans la direction longitudinale, comme représenté sur la figure 7.

Pour permettre le transport de l'ensemble, l'étui 2 comprend des moyens 27 pour permettre l'accrochage d'un dispositif de portage, tel que par exemple un cordon, une dragonne ou encore un mousqueton. Ainsi, le porteur peut transporter facilement l'ensemble en le gardant à portée d'utilisation, tout en gardant les mains libres, par exemple en le suspendant autour de son cou (grâce à un cordon) ou à sa ceinture (grâce à un mousqueton). Dans le mode de réalisation représenté, les moyens d'accrochage comprennent un orifice 27 formé sur un bord externe 18 et débouchant dans le compartiment 13.

## Revendications

1. Ensemble comprenant :
- des lunettes (1) comprenant un module optique (3) et deux branches (6) montées chacune en rotation sur respectivement un bord externe (3b) dudit module optique, lesdites branches étant déplaçables réversiblement entre une position d'utilisation, dans laquelle elles s'étendent dans une direction sensiblement perpendiculaire à un plan frontal (P) défini par lesdits bords externes, et une position de rangement, dans laquelle elles sont rabattues à l'arrière dudit module optique, lesdites lunettes présentant, lorsque les branches (6) sont en position de rangement, une conformation stable d'épaisseur nominale ; et
- un étui (2) comprenant une fente supérieure (12) débouchant dans un compartiment (13) agencé pour contenir lesdites lunettes en conformation stable, afin de permettre le rangement desdites lunettes ;
les lunettes présentent une conformation contrainte élastiquement d'épaisseur réduite par rapprochement relatif du module optique (3) et des branches (6) en position de rangement, en ce que la fente supérieure (12) est dimensionnée pour permettre le passage à travers elle des lunettes (1) en conformation contrainte, ledit compartiment étant agencé pour que le retour élastique en conformation de rangement desdites lunettes permette leur maintien dans ledit compartiment par interaction géométrique entre lesdites lunettes et ledit compartiment, et ledit ensemble étant **caractérisé en ce que** le compartiment (13) comprend un évidement central (14) agencé pour permettre la tenue manuelle des lunettes (1) en conformation contrainte dans le compartiment (13), afin de permettre leur rangement ou leur extraction dudit compartiment.

2. Ensemble selon la revendication 1, **caractérisé en ce que** l'étui (2) comprend une face avant (2a) et une face arrière (2b) qui sont espacées l'une de l'autre pour former entre elles le compartiment (13), chacune desdites faces présentant une échancrure centrale (15) qui sont disposées en regard pour former l'évidement (14).

3. Ensemble selon la revendication 2, **caractérisé en ce que** les faces avant (2a) et arrière (2b) forment entre elles la fente (12) et, à l'opposé de ladite fente, sont reliées par une bordure (17) de fermeture inférieure du compartiment (13).

4. Ensemble selon la revendication 3, **caractérisé en ce que** les faces avant (2a) et arrière (2b) forment entre elles des bords externes (18) de chaque côté de l'étui (2), lesdits bords externes étant ouverts entre lesdites faces depuis la bordure de fermeture (17) jusqu'à la fente (12).

5. Ensemble selon l'une quelconque des revendications 1 à 4, **caractérisé en ce que** le module optique (3) comprend deux unités optiques (4) reliées au niveau de leurs bords internes (3a) respectifs par un pont de nez (5), une branche (6) étant montée en rotation sur le bord externe (3b) de chacune desdites unités.

6. Ensemble selon la revendication 5, **caractérisé en ce que** l'évidement (14) est agencé pour recevoir le pont de nez (5) et les portions de branches (6) rangées en regard.

7. Ensemble selon l'une des revendications 5 ou 6, **caractérisé en ce que** l'étui (2) comprend deux modules (20) de rangement de respectivement une unité optique (4), lesdits modules étant reliés par un pont inférieur (21) disposé à l'opposé de la fente (12).

8. Ensemble selon la revendications 7, **caractérisé en ce que** chaque module de rangement (20) comprend une paroi avant (20a) et une paroi arrière (20b) qui sont espacées l'une de l'autre pour former entre elles un logement (20) de réception de respectivement une unité optique (4) et des portions de branches (6) rangées en regard.

9. Ensemble selon l'une quelconque des revendications 5 à 8, **caractérisé en ce que** le module optique (3) comprend une monture (7) qui présente deux cerclages (8) entourant chacun au moins partiellement respectivement une unité optique (4), le pont de nez (5) étant fixé aux bords internes (3a) respectifs desdits cerclages et chaque branche (6) étant montée en rotation sur le bord externe (3b) de respectivement un desdits cerclages.

10. Ensemble selon l'une quelconque des revendications 1 à 9, **caractérisé en ce que** les branches (6) et/ou le module optique (3) sont réalisé(e)s au moins partiellement en un matériau élastiquement déformable.

11. Ensemble selon l'une quelconque des revendications 1 à 10, **caractérisé en ce que** l'étui (2) est agencé pour se déformer élastiquement par appui des lunettes (1) en conformation de rangement dans le compartiment (13), afin d'assurer le maintien des lunettes (1) dans ledit compartiment.

12. Ensemble selon l'une quelconque des revendications 1 à 11, **caractérisé en ce que** la fente (12) présente une largeur qui est inférieure à celle du compartiment (13).

13. Ensemble selon l'une quelconque des revendications 1 à 12, **caractérisé en ce que** le compartiment (13) comprend au moins un plot (24) saillant intérieurement dans ledit compartiment, ledit plot étant agencé pour retenir les lunettes (1) en conformation de rangement dans ledit compartiment par interaction géométrique avec les branches (6) et/ou le module optique (3).

14. Ensemble selon la revendication 13 lorsqu'elle dépend de la revendication 8, **caractérisé en ce que** les parois avant (20a) et arrière (20b) de chaque module de rangement (20) présente chacune une surface intérieure (25), un plot (24) étant formé sur au moins l'une desdits surfaces.

15. Ensemble selon l'une quelconque des revendications 1 à 14, **caractérisé en ce que** les branches (6) sont munies en leur extrémité proximale (6a) d'un crochet (9) monté en rotation sur un axe équipant chacun des bords externes (3b) du module optique (3).

16. Ensemble selon l'une quelconque des revendications 1 à 15, **caractérisé en ce que** l'étui (2) comprend des moyens (27) pour l'accrochage d'un dispositif de portage dudit ensemble.

## Patentansprüche

1. Anordnung, umfassend:
- eine Brille (1), die ein optisches Modul (3) und zwei Bügel (6) umfasst, die jeweils drehbar an einer äußeren Kante (3b) des optischen Moduls montiert sind, wobei die Bügel reversibel zwischen einer Gebrauchsposition, in der sie sich in einer Richtung erstrecken, die im Wesentlichen senkrecht zu einer durch die äußeren Kanten definierten Frontebene (P) verläuft, und einer Aufbewahrungsposition, in der sie hinter das optische Modul gefaltet sind, verstellbar sind, wobei die Brille, wenn sich die Bügel (6) in der Aufbewahrungsposition befinden, eine stabile Form der Nenndicke aufweist; und
- ein Etui (2), das einen oberen Schlitz (12) umfasst, der in einem Fach (13) mündet, das dazu konfiguriert ist, die Brille in stabiler Form aufzunehmen, um die Aufbewahrung der Brille zu ermöglichen;
wobei die Brille eine elastisch erzwungene Form mit reduzierter Dicke durch relative Annäherung des optischen Moduls (3) und der Bügel (6) in der Aufbewahrungsposition aufweist, insofern, als der obere Schlitz (12) so dimensioniert ist, dass er den Durchgang der Brille (1) in erzwungener Form durch sich ermöglicht, wobei das Fach so angeordnet ist, dass die elastische Rückführung in die Aufbewahrungsform der Brille ermöglicht, dass diese in dem Fach durch geometrische Interaktion zwischen der Brille und dem Fach gehalten wird, und wobei die Anordnung **dadurch gekennzeichnet ist, dass** das Fach (13) eine zentrale Aussparung (14) umfasst, die so angeordnet ist, dass sie ermöglicht, die Brille (1) manuell in einer erzwungenen Form im Fach (13) zu halten, um ihre Aufbewahrung oder Entnahme aus dem Fach zu ermöglichen.

2. Anordnung nach Anspruch 1, **dadurch gekennzeichnet, dass** das Etui (2) eine vordere Fläche (2a) und eine hintere Fläche (2b) umfasst, die voneinander beabstandet sind, um dazwischen das Fach (13) zu bilden, wobei jede der Flächen eine zentrale Vertiefung (15) aufweist, die einander gegenüberliegend angeordnet sind, um die zentrale Aussparung (14) zu bilden.

3. Anordnung nach Anspruch 2, **dadurch gekennzeichnet, dass** die die vordere (2a) und die hintere (2b) Fläche den Schlitz (12) zwischen sich bilden und, gegenüber dem Schlitz, durch einen unteren Abschlussrand (17) des Fachs (13) miteinander verbunden sind.

4. Anordnung nach Anspruch 3, **dadurch gekennzeichnet, dass** die die vordere (2a) und die hintere (2b) Fläche zwischen sich äußere Kanten (18) auf jeder Seite des Etuis (2) bilden, wobei die äußeren Kanten zwischen den Flächen von dem Abschlussrand (17) bis zum Schlitz (12) offen sind.

5. Anordnung nach einem der Ansprüche 1 bis 4, **dadurch gekennzeichnet, dass** das optische Modul (3) zwei optische Einheiten (4) umfasst, die an ihren jeweiligen inneren Kanten (3a) durch einen Nasensteg (5) miteinander verbunden sind, wobei ein Bügel (6) drehbar an der äußeren Kante (3b) jeder der Einheiten montiert ist.

6. Anordnung nach Anspruch 5, **dadurch gekennzeichnet, dass** die Aussparung (14) so angeordnet ist, dass sie den Nasensteg (5) und die gegenüberliegend verstauten Teile der Bügel (6) aufnimmt.

7. Anordnung nach einem der Ansprüche 5 oder 6, **dadurch gekennzeichnet, dass** das Etui (2) zwei Module (20) zur jeweiligen Aufbewahrung einer optischen Einheit (4) umfasst, wobei die Module durch eine untere Brücke (21), die gegenüber dem Schlitz (12) angeordnet ist, miteinander verbunden sind.

8. Anordnung nach Anspruch 7, **dadurch gekennzeichnet, dass** jedes Aufbewahrungsmodul (20) eine vordere Wand (20a) und eine hintere Wand (20b) umfasst, die voneinander beabstandet sind, um dazwischen ein Gehäuse (20) zur Aufnahme jeweils einer optischen Einheit (4) und von Teilen der Bügel (6) zu bilden, die gegenüberliegend der optischen Einheit aufbewahrt werden.

9. Anordnung nach einem der Ansprüche 5 bis 8, **dadurch gekennzeichnet, dass** das optische Modul (3) einen Rahmen (7) umfasst, der zwei Umrandungen (8) aufweist, die jeweils eine optische Einheit (4) mindestens teilweise umgeben, wobei der Nasensteg (5) an den jeweiligen inneren Kanten (3a) der Umrandungen befestigt ist und jeder Bügel (6) drehbar an der äußeren Kante (3b) jeweils einer der Umrandungen montiert ist.

10. Anordnung nach einem der Ansprüche 1 bis 9, **dadurch gekennzeichnet, dass** die Bügel (6) und/oder das optische Modul (3) mindestens teilweise aus einem elastisch verformbaren Material hergestellt sind.

11. Anordnung nach einem der Ansprüche 1 bis 10, **dadurch gekennzeichnet, dass** das Etui (2) so angeordnet ist, dass es sich durch Drücken der Brille (1) in der Aufbewahrungsform im Fach (13) elastisch verformt, um das Halten der Brille (1) im Fach zu gewährleisten.

12. Anordnung nach einem der Ansprüche 1 bis 11, **dadurch gekennzeichnet, dass** der Schlitz (12) eine Breite aufweist, die geringer ist als die des Fachs (13).

13. Anordnung nach einem der Ansprüche 1 bis 12, **dadurch gekennzeichnet, dass** das Fach (13) mindestens einen Zapfen (24) umfasst, der nach innen in das Fach hineinragt, wobei der Zapfen so angeordnet ist, dass er die Brille (1) durch geometrische Interaktion mit den Bügeln (6) und/oder dem optischen Modul (3) in der Aufbewahrungsform im Fach hält.

14. Anordnung nach Anspruch 13, wenn von Anspruch 8 abhängig, wobei die vordere (20a) und die hintere (20b) Wand jedes Aufbewahrungsmoduls (20) jeweils eine innere Fläche (25) aufweisen, wobei an mindestens einer der inneren Flächen ein Zapfen (24) ausgebildet ist.

15. Anordnung nach einem der Ansprüche 1 bis 14, **dadurch gekennzeichnet, dass** die Bügel (6) an ihrem proximalen Ende (6a) mit einem Haken (9) versehen sind, der drehbar auf einer Achse montiert ist, die jede der äußeren Kanten (3b) des optischen Moduls (3) ausstattet.

16. Anordnung nach einem der Ansprüche 1 bis 15, **dadurch gekennzeichnet, dass** das Etui (2) ein Mittel (27) zum Einhängen einer Tragevorrichtung für die Anordnung umfasst.

## Claims

1. An assembly comprising:
- spectacles (1) comprising an optical module (3) and two temples (6) each mounted in rotation on respectively an external edge (3b) of said optical module, said temples being reversibly movable between a use position, wherein they extend in a direction substantially perpendicular to a frontal plane (P) defined by said external edges, and a storage position, wherein they are folded behind said optical module, said spectacles having, when the temples (6) are in the storage position, a stable conformation of nominal thickness; and
- a case (2) comprising an upper slot (12) opening into a compartment (13) arranged to contain said spectacles in stable conformation, in order to allow the storage of said spectacles;
the spectacles have a resiliently constrained conformation of reduced thickness by relatively bringing together the optical module (3) and the temples (6) in the storage position, and in that the upper slot (12) is dimensioned to allow the passage through same of the spectacles (1) in constrained conformation, said compartment being arranged so that the resilient return to the storage conformation of said spectacles allows them to be held in said compartment by geometric interaction between said spectacles and said compartment, and said assembly being **characterised in that** the compartment (13) comprises a central recess (14) arranged to allow the manual holding of the spectacles (1) in constrained conformation in the compartment (13), in order to allow their storage or their extraction from said compartment.

2. The assembly according to claim 1, **characterised in that** the case (2) comprises a front face (2a) and a rear face (2b) which are spaced from each other to form the compartment (13) therebetween, each of said faces having a central notch (15) which are disposed opposite each other to form the recess (14).

3. The assembly according to claim 2, **characterised in that** the front (2a) and rear (2b) faces form the slot (12) therebetween and, opposite said slot, said front and rear faces are connected by a lower closing border (17) of the compartment (13).

4. The assembly according to claim 3, **characterised in that** the front (2a) and rear (2b) faces form therebetween external edges (18) on each side of the case (2), said external edges being open between said faces from the closing border (17) to the slot (12).

5. The assembly according to any one of claims 1 to 4, **characterised in that** the optical module (3) comprises two optical units (4) connected at their respective internal edges (3a) by a nose bridge (5), a temple (6) being mounted in rotation on the external edge (3b) of each of said units.

6. The assembly according to claim 5, **characterised in that** the recess (14) is arranged to receive the nose bridge (5) and the portions of the temples (6) arranged facing said bridge.

7. The assembly according to one of claims 5 or 6, **characterised in that** the case (2) comprises two modules (20) for respectively storing an optical unit (4), said modules being interconnected by a lower bridge (21) disposed opposite the slot (12).

8. The assembly according to claim 7, **characterised in that** each storage module (20) comprises a front wall (20a) and a rear wall (20b) which are spaced from each other to form therebetween a housing (20) for receiving respectively an optical unit (4) and portions of the temples (6) stored opposite said optical unit.

9. The assembly according to any one of claims 5 to 8, **characterised in that** the optical module (3) comprises a frame (7) which has two rims (8) each at least partially surrounding respectively an optical unit (4), the nose bridge (5) being fixed to the respective internal edges (3a) of said rims and each temple (6) being mounted in rotation on the external edge (3b) of one of said rims respectively.

10. The assembly according to any one of claims 1 to 9, **characterised in that** the temples (6) and/or the optical module (3) are made at least partially of a resiliently deformable material.

11. The assembly according to any one of claims 1 to 10, **characterised in that** the case (2) is arranged to resiliently deform by pressing the spectacles (1) in storage conformation in the compartment (13), in order to ensure that the spectacles (1) are held in said compartment.

12. The assembly according to any one of claims 1 to 11, **characterised in that** the slot (12) has a width which is less than that of the compartment (13).

13. The assembly according to any one of claims 1 to 12, **characterised in that** the compartment (13) comprises at least one stud (24) projecting internally in said compartment, said stud being arranged to retain the spectacles (1) in storage conformation in said compartment by geometric interaction with the temples (6) and/or the optical module (3).

14. The assembly according to claim 13 when dependent on claim 8, **characterised in that** the front (20a) and rear (20b) walls of each storage module (20) each has an inner surface (25), a stud (24) being formed on at least one of said surfaces.

15. The assembly according to any one of claims 1 to 14, **characterised in that** the temples (6) are provided at their proximal end (6a) with a hook (9) mounted in rotation on an axis equipping each of the external edges (3b) of the optical module (3).

16. The assembly according to any one of claims 1 to 15, **characterised in that** the case (2) comprises means (27) for the attachment of a device for carrying said assembly.
